# EUROPEAN PATENT APPLICATION

(11) **EP 4 592 786 A1**
(43) Date of publication of application: **30.07.2025**
(21) Application number: 24153955.0
(22) Date of filing: 25.01.2024
(51) Int. Cl.: G05D 1/244, G05D 1/646

(54) **LINE TRACING ROBOT AND METHOD OF CONTROLLING LINE TRACING ROBOT**

(71) Applicant: Marusys Co., Ltd., Seoul 06222 (KR)
(72) Inventor: PARK, Yong Gyu, 07324 Seoul (KR)
(74) Representative: Ström & Gulliksson AB

(57) **Abstract**

A line tracing robot driving according to an embodiment of the present disclosure may include: a sensing unit configured to irradiate light to the driving line and receive light reflected by the driving line; a controller configured to convert a pattern unit provided on the driving line based on received light, into a binary code based on a length of a first pattern and a length of a second pattern, the pattern unit comprising a plurality of patterns in which the first pattern and the second pattern are alternately and repeatedly disposed, and to read a command corresponding to a converted binary code; and a driver configured to perform a corresponding operation according to a command corresponding to the read binary code, wherein the first pattern and the second pattern have different levels of brightness.

## Description

### BACKGROUND

### 1. FIELD

The present disclosure relates to a line tracing robot and a method of controlling the line tracing robot.

### 2. DESCRIPTION OF RELATED ART

A line tracing robot refers to a robot driving along a line drawn on a surface.

The line tracing robot moves by tracing lines formed in black or other colors which the robot distinguishes from the surface, and a method to use the line tracing robot for coding education for children is being studied.

A line tracing robot used in conventional coding education arranges color codes formed of a combination of a plurality of colors, such as green, red, and blue, and recognizes the arranged color codes through a color sensor to control a driving motion of a robot, for example, a direction change and in-place rotation.

Since such a conventional method uses a combination of a plurality of colors for a color code and requires procedures such as color correction, there may be a problem in that the method may be very complicated to implement.

(Patent Document 1) Korean Laid-open Patent Publication No. 10-2018-0091562 ("Driving Code Forming and Positioning Method of Coding Robot," Publication Date: August 16, 2018)

### SUMMARY

An aspect of the present disclosure is to provide a line tracing robot and a method of controlling a line tracing robot, capable of controlling an operation of a line tracing robot without using an expensive color sensor, simultaneously with controlling an operation of the line tracing robot in a simple manner, and making it easier for children to understand a concept of a binary code.

According to an aspect of the present disclosure, provided is a line tracing robot for driving along a driving line, including: a sensing unit configured to irradiate light to the driving line and receive light reflected by the driving line; a controller configured to convert a pattern unit provided on the driving line based on received light, into a binary code based on a length of a first pattern and a length of a second pattern, the pattern unit comprising a plurality of patterns in which the first pattern and the second pattern are alternately and repeatedly disposed, and to read a command corresponding to a converted binary code; and a driver configured to perform a corresponding operation according to a command corresponding to the read binary code, wherein the first pattern and the second pattern have different levels of brightness.

According to another aspect of the present disclosure, provided is a method of controlling a line tracing robot driving along a driving line, including: a first operation of irradiating light to the driving line and receiving light reflected by the driving line, in a sensing unit; a second operation of converting, in a controller, a pattern unit provided on the driving line based on received light, into a binary code based on a length of a first pattern and a length of a second pattern, the pattern unit comprising a plurality of patterns in which the first pattern and the second pattern are alternately and repeatedly disposed, and reading a command corresponding to a converted binary code; and a third operation of performing a corresponding operation according to a command corresponding to the read binary code, in a driver, wherein the first pattern and the second pattern have different levels of brightness.

According to another aspect of the present disclosure, provided is a computer-readable storage medium recording a program for executing the method on a computer.

According to an embodiment of the present disclosure, by alternately and repeatedly arranging two patterns having different levels of brightness on a driving line and reading a command of a binary code based on the lengths of two patterns, an operation of a line tracing robot may be controlled in a simple manner, and this may help children easily understand the concept of the binary code.

Furthermore, according to an embodiment of the present disclosure, when the two patterns described above are implemented as achromatic patterns, an operation of the line tracing robot may be controlled without using an expensive color sensor.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a view illustrating a line tracing robot driving along a driving line according to an embodiment of the present disclosure;
FIG. 2 is a block diagram of a line tracing robot according to an embodiment of the present disclosure;
FIG. 3(a) (b) is a view illustrating a pattern unit provided on a driving line according to an embodiment of the present disclosure;
FIG. 4(a)(b)(c) is a view illustrating a pattern unit provided on a driving line according to another embodiment of the present disclosure;
FIG. 5 is a flowchart illustrating a method of controlling a line tracing robot according to an embodiment of the present disclosure; and
FIG. 6 is a block diagram of a computer device capable of fully or partially implementing a line tracing robot according to an embodiment of the present disclosure.

### DETAILED DESCRIPTION

Hereinafter, embodiments of the present disclosure will be described with reference to the attached drawings. The embodiments of the present disclosure may, however, be exemplified in many different forms and should not be construed as being limited to the specific embodiments set forth herein. In the drawings, the shapes and dimensions of elements may be exaggerated for clarity, and the same reference numerals will be used throughout to designate the same or like elements.

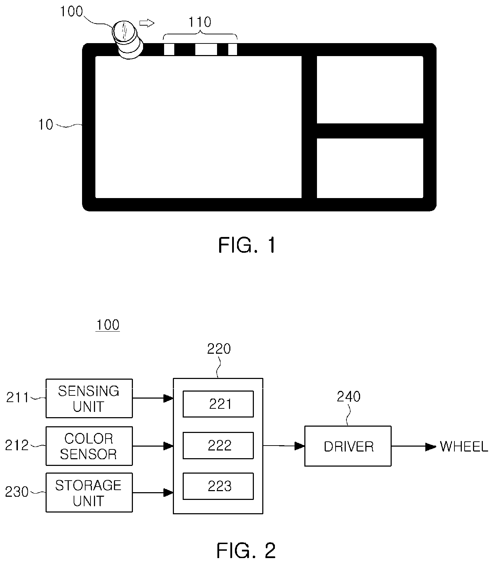

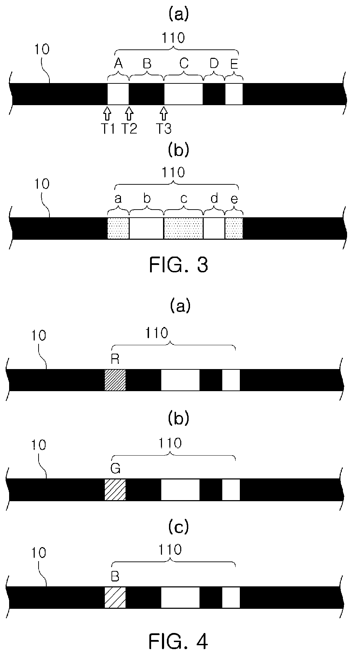

FIG. 1 is a view illustrating a line tracing robot driving along a driving line according to an embodiment of the present disclosure. Furthermore, FIG. 2 is a block diagram of a line tracing robot according to an embodiment of the present disclosure. FIG. 3 is a view illustrating a pattern unit provided on a driving line according to an embodiment of the present disclosure, and FIG. 4 is a view illustrating a pattern unit provided on a driving line according to another embodiment of the present disclosure.

First, as illustrated in FIG. 1, a line tracing robot 100 may be a robot driving along a driving line 10. Since the mechanism by which the line tracing robot 100 moves along the driving line 10 is a well-known technology, in the present disclosure, detailed descriptions thereof are omitted.

Meanwhile, the driving line 10 described above may be provided with a pattern unit 110. Although FIG. 1 illustrates only one pattern unit 110 for convenience, the driving line 10 may include two or more pattern units.

Specifically, FIGS. 3 and 4 illustrate a pattern unit 110 according to an embodiment of the present disclosure. FIG. 3 illustrates a case in which the pattern unit 110 includes an achromatic color, and FIG. 4 illustrates a case in which the pattern unit 110 includes a chromatic color.

As illustrated in FIG. 3, the pattern unit 110 may be comprised of a plurality of patterns in which a first pattern and a second pattern are alternately and repeatedly disposed, and a length of the first pattern and a length of the second pattern may be identical to or different from each other. Additionally, the first pattern is an achromatic pattern having a first level of brightness, and the second pattern may be an achromatic pattern having a second level of brightness that is different from the first level of brightness. The first level of brightness and the second level of brightness may be known from the amount of light reflected and received by the driving line including the pattern unit, and may include a value in a preset error range based on the first level of brightness, or may include a value in a preset error range based on the second level of brightness, in consideration of an error of a sensing unit 211.

That is, in the present disclosure, the first pattern and the second pattern may be defined as portions of a driving line that have the same or different lengths and different levels of brightness.

Specifically, according to an embodiment of the present disclosure, as illustrated in (a) of FIG. 3, the first patterns A, C and E may be achromatic patterns having a first level of brightness (e.g. white), and the second pattern B and D may be achromatic patterns having a second level of brightness (e.g., black). Here, either the first level of brightness or the second level of brightness may be the same as the brightness of the driving line 10. In (a) of FIG. 3, the second patterns B and D may be the same as the brightness (e.g., black) of the driving line 10.

Meanwhile, according to an embodiment of the present disclosure, as illustrated in (b) of FIG. 3, the first patterns a, c and e may be achromatic patterns having a first level of brightness (e.g. gray), and the second patterns b and d may be achromatic patterns having a second level of brightness (e.g., white). Here, the first level of brightness (e.g., gray) and the second level of brightness (e.g., white) may be different from the brightness (e.g., black) of the driving line 10.

Meanwhile, according to another embodiment of the present disclosure, as illustrated in FIG. 4, one of a plurality of first patterns or one of a plurality of second patterns disposed on the pattern unit 110 may be a chromatic color. For example, as illustrated in (a) of FIG. 4, the first pattern of the pattern unit 110 may be red (R), as illustrated in (b) of FIG. 4, the first pattern of the pattern unit 110 may be green (G), or as illustrated in (c) of FIG. 4, the first pattern of the pattern unit 110 may be blue (B).

Meanwhile, as illustrated in FIG. 2, the line tracing robot 100 according to an embodiment of the present disclosure may include a sensing unit 211, a controller 220, a storage unit 230, and a driver 240, and may further include a color sensor 212 according to an embodiment of the present disclosure.

Specifically, the sensing unit 211 may irradiate light to the driving line 10 and receives light reflected by the driving line 10, and transmit information (e.g., the amount of light) of the received light to the controller 220.

Meanwhile, according to an embodiment of the present disclosure, a color sensor 212 may be further included, and the color sensor 212 may read a color of the driving line 10 including the pattern unit 110. The read color may be transmitted to the controller 220.

The controller 220 may convert the pattern unit 110 provided on the driving line 10 into a binary code based on the information (e.g., the amount of light) of the received light, and may read a command corresponding to the converted binary code.

For this purpose, according to an embodiment of the present disclosure, the controller 220 may include a first module 221, a second module 222, and a third module 223. the controller 220 may include a processor (for example, a computer, a microprocessor, a CPU, an ASIC, a logic circuit, or the like) and a memory storing software instructions providing functions of the control unit 120 when executed by the processor. Here, the processor and the memory may be implemented as separate semiconductor circuits. Alternatively, the processor and the memory may be implemented as a single integrated semiconductor circuit. The number of processors may be one or more.

Specifically, the first module 221 may calculate a length of the first pattern and a length of the second pattern constituting the pattern unit 110, respectively, based on the amount of received light and the driving speed.

Here, the length of the first pattern may be a value obtained by multiplying the driving speed by a time interval between a point in time at which the pattern disposed immediately before is changed to the first pattern and a point in time at which the first pattern is changed to the second pattern disposed immediately thereafter.

For example, in (a) FIG. 3, the length of the first pattern A may be obtained by multiplying the driving speed by a time interval (T2-T1) between a point in time T1 at which a pattern disposed immediately before is changed to the first pattern A (however, a point in time at which the brightness of the driving line 10 is changed, in the case of the first pattern A) and a point in time T2 at which the first pattern A is changed to the second pattern B disposed immediately thereafter.

Furthermore, a length of the second pattern may be a value obtained by multiplying the driving speed by a time interval between a point in time at which a pattern disposed immediately before is changed to the second pattern and a point in time at which the second pattern is changed to the first pattern disposed immediately thereafter.

For example, in (a) of FIG. 3, a length of the second pattern B may be obtained by multiplying the driving speed by a time interval (T3-T2) between a point in time T2 when the pattern A disposed immediately before is changed to the second pattern B and a point in time T3 at which the second pattern B is changed to the first pattern A disposed immediately thereafter.

The first pattern and second pattern described above may be recognized or distinguished based on the amount of received light.

The second module 222 may convert the pattern unit 110 into a binary code based on the length of the first pattern and the length of the second pattern.

Specifically, the second module 222 may convert a pattern having a fixed first length, among the first pattern and the second pattern, into a bit value of 0 or 1, and may convert a pattern having a fixed second length different from the first length into the remaining bit value (hereinafter referred to as a 'fixed method'). As an example, the fixed second length may be twice (or more than twice) the fixed first length.

For example, in FIG. (a) of 3, if the first fixed length is 4 mm and a bit value thereof is set to 0, and the fixed second length is 8 mm and a bit value thereof is set to 1, (a) of FIG. 3 may be converted to a binary code of 01100.

Alternatively, the second module 222 may convert a pattern having the same length as a first recognized pattern, among the first pattern and the second pattern disposed in the pattern unit 110, to a bit value of 0 or 1, and may convert a pattern having a length different from a length of the first recognized pattern into the remaining bit value (hereinafter referred to as a 'user-specified method').

For example, in (a) of FIG. 3, if the length of the first pattern A, that is, the first recognized pattern among the first and second patterns disposed on the pattern unit 110, is 4 mm, the patterns A, D and E having the length of 4 mm may have a bit value of 0, and the patterns B and C having a length of 8 mm may have a bit value of 1. Accordingly, in (a) of FIG. 3 may be converted to the binary code of 01100.

Furthermore, when the length of the first pattern or the second pattern recognized based on the amount of received light does not change by more than a certain length, or when the number of bits of the read binary code is a predetermined number, the second module 222 may terminate the conversion into the binary code.

In other words, a command may be made into a binary code of a variable length. For example, the command is made into a 2-bit command, a 3-bit command, or a 4-bit command. By utilizing the command in a variable-length binary code, the number of short bits may be allocated to frequently used commands, and the number of long bits may be allocated to infrequently used commands, so that overall, an average number of bits of commands used when the robot operates may be reduced.

Additionally, when the number of bits in the command is designed to be fixed at specified number of bits (e.g. 3 or 4 bits), there may be an advantage in that the command may be quickly interpreted by reading the specified number of bits and then interpreting the same immediately, and the robot can quickly understand the termination of the code and quickly interpret the command.

Meanwhile, according to an embodiment of the present disclosure, in the case in which the pattern unit 110 includes a chromatic color, when the color of the chromatic color is read, the second module 222 may terminate the conversion into the binary code.

In other words, when a last pattern of the pattern unit 110 is set to a chromatic color and is recognized, the conversion into the binary code may be terminated. Because colors are read, it may be possible to quickly interpret codes regardless of a variable or fixed length.

Furthermore, according to an embodiment of present disclosure, when the first recognized pattern among the first and second patterns disposed on the pattern unit 110 is a chromatic color, the second module 222 may also use the first recognized pattern as an inversion code.

In examples illustrated in (a), (b) and (c) of FIG. 4 above, when the first pattern is a chromatic color (R, G and B), the binary code may be converted to 10011 by inverting 01100. That is, when the length of the pattern unit 110 is long, there is an advantage in that the length of the pattern unit 110 may be reduced using the inverted code.

Finally, the third module 223 may read a command corresponding to the converted binary code by referring to the storage unit 230.

According to an embodiment of present disclosure, when the first recognized pattern among the first pattern and the second pattern disposed in the pattern unit 110 is a chromatic color, the third module 223 may read a command corresponding to the read binary code as another pre-stored command, depending on the color of the read chromatic color.

For example, as illustrated in FIG. 4, for the same binary code 01100, three separate commands may be created: R+01100, G+01100, and B+01100. In this case, there may be an advantage of being able to create more command combinations without increasing the length of the binary code. The corresponding commands for each binary code, including color, may be stored in advance in the storage unit 230.

The storage unit 230 may store a command corresponding to the binary code. The command may include, for example, at least one of in-place rotation, a direction change, a speed change, stop, and driving after stopping for a certain period of time.

The driver 240 may perform a corresponding operation by controlling a wheel according to the command corresponding to the read binary code.

As described above, according to an embodiment of present disclosure, two patterns having different lengths may be alternately and repeatedly disposed on the driving line, and a binary code command may be read based on the lengths of the two patterns, so that an operation of the line tracing robot may be controlled in a simple manner, and this may help children easily understand the concept of the binary code.

Furthermore, according to an embodiment of present disclosure, when the above-mentioned two patterns are implemented as achromatic patterns, the operation of the line tracing robot may be controlled without using expensive color sensors.

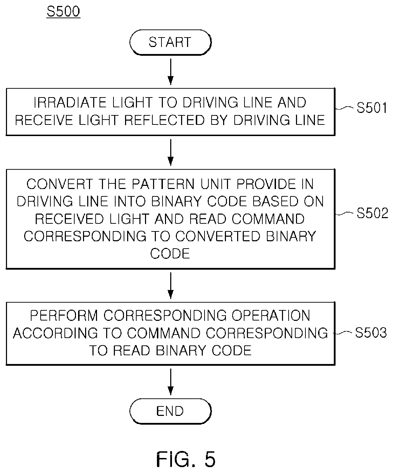

FIG. 5 is a flowchart illustrating a method of controlling a line tracing robot according to an embodiment of the present disclosure.

Hereinafter, a method of controlling a line tracing robot according to an embodiment of present disclosure will be described with reference to FIGS. 1 to 5. However, for simplification of the disclosure, descriptions overlapping with FIGS. 1 to 4 will be omitted.

First, as illustrated in FIGS. 1 to 5, the method of controlling the line tracing robot according to an embodiment of present disclosure may be initiated by an operation of irradiating light to a driving line 10 and receiving light reflected by the driving line 10 (S501). Information on the received light (e.g., the amount of light) may be transmitted to a controller 220.

Meanwhile, according to an embodiment of present disclosure, a color sensor 212 may be further included, and as described above, the color sensor 212 may read a color of the driving line 10 including a pattern unit 110 and then transmit the color to the controller 220.

The above-described driving line 10 may be provided with the pattern unit 110.

Specifically, FIGS. 3 and 4 illustrate the pattern unit 110 according to an embodiment of present disclosure. FIG. 3 illustrates a case in which the pattern unit 110 includes an achromatic color, and FIG. 4 illustrates a case in which the pattern unit 110 includes a chromatic color.

As illustrated in FIG. 3, the pattern unit 110 may be comprised of a plurality of patterns in which first patterns and second patterns are alternately and repeatedly disposed, and as described above, the brightness of the first pattern and the second pattern may be different from each other, and the length of the first pattern and the length of the second pattern may be identical to or different from each other.

That is, the first pattern may be an achromatic pattern having a first level of brightness, and the second pattern may be an achromatic pattern having a second level of brightness that is different from the first level of brightness. As described above, the first level of brightness and the second level of brightness may be known from the amount of light reflected and received by the driving line including the pattern portion, and may include a value in a preset error range based on the first level of brightness, or may include a value in a preset error range based on the second level of brightness, in consideration of an error of a sensing unit 211.

Here, as described above, either the first level of brightness or the second level of brightness may be the same as the brightness of the driving line 10, or the first level of brightness and the second level of brightness may be different from the brightness of the driving line 10.

Meanwhile, according to another embodiment of present disclosure, as illustrated in FIG. 4, one of a plurality of first patterns or one of a plurality of second patterns disposed on the pattern unit 110 may be a chromatic color, as described above.

Next, the controller 220 may convert the pattern unit 110 provided in the driving line 10 into a binary code based on the received light information (e.g., the amount of light) and may read a command corresponding to the converted binary code (S502).

Specifically, the first module 221 may calculate a length of the first pattern and a length of the second pattern constituting the pattern unit 110, respectively, based on the amount of received light and the traveling speed.

Here, as described above, the length of the first pattern may be a value obtained by multiplying the driving speed by a time interval between a point in time at which the pattern disposed immediately before is changed to the first pattern and a point in time at which the first pattern is changed to the second pattern disposed immediately thereafter.

Furthermore, as described above, a length of the second pattern may be a value obtained by multiplying the driving speed by a time interval between a point in time at which a pattern disposed immediately before is changed to the second pattern and a point in time at which the second pattern is changed to the first pattern disposed immediately thereafter.

The first pattern and second pattern described above may be recognized or distinguished based on the amount of received light.

Additionally, as described above, the second module 222 may convert the pattern unit 110 into the binary code based on the length of the first pattern and the length of the second pattern.

Specifically, the second module 222 may convert the pattern having a fixed first length, among the first pattern and the second pattern, into a bit value of 0 or 1, and may convert a pattern having a fixed second length different from the first length into the remaining bit value (hereinafter referred to as a 'fixed method'). As an example, the second fixed length may be twice the first fixed length.

Alternatively, the second module 222 may convert a pattern having the same length as a first recognized pattern, among the first pattern and the second pattern disposed in the pattern unit 110, into a bit value of 0 or 1, and may convert a pattern having a length different from a length of the first recognized pattern into the remaining bit value (hereinafter referred to as a 'user-specified method').

Furthermore, when the length of the first pattern or the second pattern recognized based on the amount of received light does not change by more than a certain length, or when the number of bits of the read binary code is a predetermined number, the second module 222 may terminate the conversion into the binary code.

Alternatively, according to an embodiment of present disclosure, in the case in which the pattern unit 110 includes a chromatic color, when the color of the chromatic color is read, the second module 222 may terminate the conversion into the binary code.

Finally, the third module 223 may read a command corresponding to the converted binary code by referring to the storage unit 230.

According to an embodiment of present disclosure, when the first recognized pattern among the first pattern and the second pattern disposed in the pattern unit 110 is a chromatic color, the third module 223 may read a command corresponding to the read binary code as another pre-stored command, depending on the color of the read chromatic color, as described above.

Finally, the driver 240 may perform a corresponding operation by controlling a wheel according to the command corresponding to the read binary code (S503). Here, as described above, the command corresponding to the binary code may include at least one of, for example, in-place rotation, a direction change, a speed change, stop, and driving after stopping for a certain period of time.

As described above, according to an embodiment of the present disclosure, two patterns having different levels of brightness are alternately and repeatedly disposed on the driving line, and a binary code command may be read based on the lengths of the two patterns, so that an operation of the line tracing robot in a simple manner, and this may help children easily understand the concept of the binary code.

Furthermore, according to an embodiment of the present disclosure, when the above-mentioned two patterns are implemented as achromatic patterns, the operation of the line tracing robot may be controlled without using expensive color sensors.

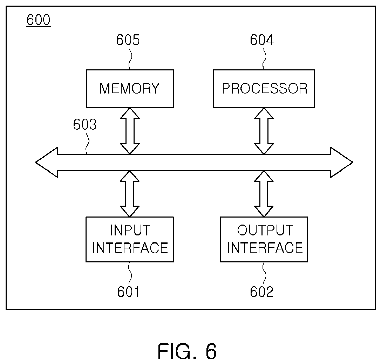

Meanwhile, FIG. 6 is a block diagram of a computer device capable of fully or partially implementing a line tracing robot according to an embodiment of the present disclosure, which may be applied to the controller 220 illustrated in FIG. 1.

As illustrated in FIG. 6, a computer device 600 may include an input interface 601, an output interface 602, a processor 604, and a memory 605, and the input interface 601, the output interface 602, the processor 604, and the memory 605 may be interconnected through a system bus 603.

In an embodiment of the present disclosure, the memory 605 may be used to store a program, a command, or a code, and the processor 604 may execute the program and the command, or the code stored in the memory 605, may control the input interface 601 to receive signals, and may control the output interface 602 to transmit signals. The memory 605 described above may include a read-only memory and a random access memory, and may provide a command and data to the processor 604.

In an embodiment of the present disclosure, it should be understood that the processor 604 may be a central processing unit (CPU), and may be another general-purpose processor, a digital signal processor (DSP), an application specific integrated circuit (ASIC), a field programmable gate array (FPGA), or another programmable logic device, an individual gate or a transistor logical device, and an individual hardware component. A general-purpose processor may be a microprocessor, or the processor may be any conventional processor.

In an implementation process, a method performed in the device 220 of FIG. 2 may be achieved by an integrated logic circuit in hardware within the processor 604 or a command in the form of software. The content of the method disclosed in relation to an embodiment of the present disclosure may be implemented to be performed and completed by a hardware processor, or to be performed and completed by a combination of hardware and software modules of the processor. The software module may be disposed in a storage medium such as a random access memory, a flash memory, a read-only memory, a programmable read-only memory, or an electrically erasable programmable memory, a registers and the like. The storage medium is disposed in memory 605, and the processor 604 reads information from the memory 605 and implements the content of the above-described method through the combination with hardware. In order to avoid duplication, detailed descriptions thereof are omitted here.

The present disclosure is not limited to the above-described embodiments and the accompanying drawings but is defined by the appended claims. Therefore, it will be apparent to those skilled in the art that various replacements, modifications, or changes could be made without departing from the scope of the present disclosure defined by the appended claims, and these replacements, modifications, or changes should be construed as being included in the scope of the present disclosure.

## Claims

1. A line tracing robot driving along a driving line, the line tracing robot comprising:
a sensing unit configured to irradiate light to the driving line and receive light reflected by the driving line;
a controller configured to convert a pattern unit provided on the driving line based on received light, into a binary code based on a length of a first pattern and a length of a second pattern, the pattern unit comprising a plurality of patterns in which the first pattern and the second pattern are alternately and repeatedly disposed, and to read a command corresponding to a converted binary code; and
a driver configured to perform a corresponding operation according to a command corresponding to the read binary code,
wherein the first pattern and the second pattern have different levels of brightness.

2. The line tracing robot according to claim 1, further comprising:
a storage unit configured to store a corresponding command for each binary code,
wherein the controller comprises:
a first module configured to obtain a length of the first pattern and a length of the second pattern constituting the pattern unit based on an amount of received light and driving speed;
a second module configured to convert the pattern unit into a binary code based on the length of the first pattern and the length of the second pattern obtained; and
a third module configured to read a command corresponding to the converted binary code with reference to the storage unit.

3. The line tracing robot according to claim 2, wherein the length of the first pattern is a value obtained by multiplying the driving speed by a time interval between a point in time at which a pattern disposed immediately before is changed to the first pattern and a point in time at which the first pattern is changed to a second pattern disposed immediately thereafter,
a length of the second pattern is a value obtained by multiplying the driving speed by a time interval between a point in time at which the pattern disposed immediately before is changed to the second pattern and a point in time at which the second pattern is changed to a first pattern disposed immediately thereafter, and
the first pattern and the second pattern are recognized based on the amount of received light.

4. The line tracing robot according to claim 3, wherein the second module is configured to,
convert a pattern having a fixed first length, among the first pattern and the second pattern, into a bit value of 0 or 1, and convert a pattern having a fixed second length different from the first length into a remaining bit value; or,
convert a pattern having the same length as a first recognized pattern, among the first pattern and the second pattern disposed in the pattern unit, into a bit value of 0 or 1, and convert a pattern having a length different from a length of the first recognized pattern into a remaining bit value.

5. The line tracing robot according to claim 1, wherein the first pattern is an achromatic pattern having a first level of brightness,
the second pattern is an achromatic pattern having a second level of brightness different from the first level of brightness, and
one of the first level of brightness and the second level of brightness is the same as brightness of the driving line, or
the first level of brightness and the second level of brightness are different from the brightness of the driving line.

6. The line tracing robot according to claim 2, wherein one of the plurality of first patterns disposed on the pattern unit or one of the plurality of second patterns is a chromatic color, and
wherein the line tracing robot further comprises:
a color sensor configured to read a color of a chromatic color.

7. The line tracing robot according to claim 6, wherein when a first recognized pattern among the first pattern and the second pattern disposed in the pattern unit is a chromatic color, and
the third module reads a command corresponding to the read binary code as another pre-stored command, depending on the read color of the chromatic color.

8. The line tracing robot according to claim 7, wherein, when the color of the chromatic color is read, the second module terminates a conversion into a binary code.

9. The line tracing robot according to claim 3, wherein, when a length of the first pattern or the second pattern recognized based on the amount of received light does not change by a certain length or more, or the number of bits of the read binary code is a predetermined number,
the second module terminates a conversion into a binary code.

10. The line tracing robot according to claim 1, wherein the pattern unit is provided in at least two numbers on the driving line.

11. The line tracing robot according to claim 1, wherein the command comprises at least one of in-place rotation, a direction change, a speed change, stop and driving after stopping for a certain period of time.

12. A method of controlling a line tracing robot driving along a driving line, the method comprising:
a first operation of irradiating light to the driving line and receiving light reflected by the driving line, in a sensing unit;
a second operation of converting, in a controller, a pattern unit provided on the driving line based on received light, into a binary code based on a length of a first pattern and a length of a second pattern, the pattern unit comprising a plurality of patterns in which the first pattern and the second pattern are alternately and repeatedly disposed, and reading a command corresponding to a converted binary code; and
a third operation of performing a corresponding operation according to a command corresponding to the read binary code, in a driver,
wherein the first pattern and the second pattern have different levels of brightness.

## Amended claims

### Amended claims in accordance with Rule 137(2) EPC.

**1.** A line tracing robot driving along a driving line, the line tracing robot comprising:
a sensing unit 211 configured to irradiate light to the driving line 10 and receive light reflected by the driving line 10;
a controller 220 configured to convert a pattern unit 110 provided on the driving line 10 based on received light, into a binary code based on a length of a first pattern and a length of a second pattern, the pattern unit 110 comprising a plurality of patterns in which the first pattern and the second pattern are alternately and repeatedly disposed, the first pattern and the second pattern have different levels of brightness, and to read a command corresponding to a converted binary code;
a color sensor 212 configured to read a color of a chromatic color;
a storage unit 230 configured to store a corresponding command for each binary code, and
a driver 240 configured to perform a corresponding operation according to a command corresponding to the read binary code,
wherein the controller 220 comprises:
a first module 210 configured to obtain a length of the first pattern and a length of the second pattern constituting the pattern unit 110 based on an amount of received light and driving speed;
a second module 220 configured to convert the pattern unit 110 into a binary code based on the length of the first pattern and the length of the second pattern obtained; and
a third module 230 configured to read a command corresponding to the converted binary code with reference to the storage unit 230, and
wherein one of a plurality of first patterns disposed on the pattern unit or one of a plurality of second patterns is a chromatic color, and
**characterized in that** when a first recognized pattern among the first pattern and the second pattern disposed in the pattern unit is a chromatic color, the third module 223 reads a command corresponding to the read binary code as another pre-stored command, depending on read color of the chromatic color.

**3.** The line tracing robot according to claim 1, wherein the length of the first pattern is a value obtained by multiplying the driving speed by a time interval between a point in time at which a pattern disposed immediately before is changed to the first pattern and a point in time at which the first pattern is changed to a second pattern disposed immediately thereafter,
a length of the second pattern is a value obtained by multiplying the driving speed by a time interval between a point in time at which the pattern disposed immediately before is changed to the second pattern and a point in time at which the second pattern is changed to a first pattern disposed immediately thereafter, and
the first pattern and the second pattern are recognized based on the amount of received light.

**4.** The line tracing robot according to claim 3, wherein the second module 222 is configured to,
convert a pattern having a fixed first length, among the first pattern and the second pattern, into a bit value of 0 or 1, and convert a pattern having a fixed second length different from the first length into a remaining bit value; or,
convert a pattern having the same length as a first recognized pattern, among the first pattern and the second pattern disposed in the pattern unit, into a bit value of 0 or 1, and convert a pattern having a length different from a length of the first recognized pattern into a remaining bit value.

**5.** The line tracing robot according to claim 1, wherein the first pattern is an achromatic pattern having a first level of brightness,
the second pattern is an achromatic pattern having a second level of brightness different from the first level of brightness, and
one of the first level of brightness and the second level of brightness is the same as brightness of the driving line, or
the first level of brightness and the second level of brightness are different from the brightness of the driving line.

**8.** The line tracing robot according to claim 1, wherein, when the color of the chromatic color is read, the second module 222 terminates a conversion into a binary code.

**9.** The line tracing robot according to claim 3, wherein, when a length of the first pattern or the second pattern recognized based on the amount of received light does not change by a certain length or more, or the number of bits of the read binary code is a predetermined number,
the second module 220 terminates a conversion into a binary code.

**10.** The line tracing robot according to claim 1, wherein the pattern unit 110 is provided in at least two numbers on the driving line.

**11.** The line tracing robot according to claim 1, wherein the command comprises at least one of in-place rotation, a direction change, a speed change, stop and driving after stopping for a certain period of time.

**12.** A method of controlling a line tracing robot driving along a driving line, the method comprising:
a first operation S501 of irradiating light to the driving line 10 and receiving light reflected by the driving line 10, in a sensing unit 211;
a second operation S502 of converting, in a controller 220, a pattern unit 110 provided on the driving line 10 based on received light, into a binary code based on a length of a first pattern and a length of a second pattern, the pattern unit 110 comprising a plurality of patterns in which the first pattern and the second pattern are alternately and repeatedly disposed, the first pattern and the second pattern have different levels of brightness, and reading a command corresponding to a converted binary code; and
a third operation S503 of performing a corresponding operation according to a command corresponding to the read binary code, in a driver 240,
wherein a second operation S502 comprising:
obtaining a length of the first pattern and a length of the second pattern constituting the pattern unit 110 based on an amount of received light and driving speed;
converting the pattern unit 110 into a binary code based on the length of the first pattern and the length of the second pattern obtained; and
reading a command corresponding to the converted binary code,
wherein one of a plurality of first patterns disposed on the pattern unit or one of a plurality of second patterns is a chromatic color,
**characterized in that** when a first recognized pattern among the first pattern and the second pattern disposed in the pattern unit is a chromatic color, the third operation S503 reads a command corresponding to the read binary code as another pre-stored command, depending on read color of the chromatic color
